## Europäisches Patentamt

## European Patent Office

## Office européen des brevets

(11) Veröffentlichungsnummer: **0 311 710 B1**

(12) **EUROPÄISCHE PATENTSCHRIFT**

(45) Veröffentlichungstag der Patentschrift:
19.09.90

(51) Int. Cl.⁵: **G01B 3/16, B43L 9/02, B43L 9/24**

(21) Anmeldenummer: **87115079.3**

(22) Anmeldetag: **15.10.87**

(54) **Messzirkel.**

(43) Veröffentlichungstag der Anmeldung:
**19.04.89 Patentblatt 89/16**

(45) Bekanntmachung des Hinweises auf die Patenterteilung:
**19.09.90 Patentblatt 90/38**

(84) Benannte Vertragsstaaten:
**AT BE CH DE ES FR GB GR IT LI LU NL SE**

(56) Entgegenhaltungen:
**CH-A- 112 014**
**DE-A- 3 442 675**
**DE-B- 1 004 384**
**DE-C- 60 665**
**DE-C- 805 191**
**FR-A- 988 303**
**FR-A- 1 032 270**
**FR-A- 1 441 541**
**FR-A- 1 575 727**
**US-A- 3 430 347**

(73) Patentinhaber: **Kiefer, Klaus Jürgen, Jungfernstieg 34, D-2000 Hamburg 36(DE)**
Patentinhaber: **Straten, Günter, Meilsdorfer Damm 12, D-2071 Siek-Meilsdorf(DE)**

(72) Erfinder: **Straten, Günter, Meilsdorfer Damm 12, D-2071 Siek-Meilsdorf(DE)**

(74) Vertreter: **Richter, Werdermann & Gerbaulet, Neuer Wall 10, D-2000 Hamburg 36(DE)**

## Beschreibung

Die Erfindung betrifft einen Zirkel, bestehend aus zwei durch ein Scharnier verbundenen Schenkeln, von denen der erste Schenkel eine Stahlspitze oder Zentriernadel als Stecheinrichtung und der zweite Schenkel ein einen auswechselbaren Zeicheneinsatz tragenden und über ein Gelenk verbundenen Tragteil aufweist, wobei der erste Schenkel mit einer Meß- und Halterungseinrichtung versehen ist, die einendseitig an den ersten Schenkel angelenkt ist und an ihrem anderen Ende eine Stecheinrichtung aufweist, wobei die Meß- und Halterungseinrichtung eine Durchbrechung aufweist, durch die ein mit Längenteilungen versehenes Meßlineal hindurchführbar ist, das mit seinem einen Ende an den Tragteil des zweiten Schenkels lösbar befestigt ist und mit seinem anderen, freien, durch die Durchbrechung durchführbaren Ende auskragend ist.

Bei Zirkeln handelt es sich um Geräte zum Zeichnen von Kreisen oder Kurven, zum Abgreifen von Maßen und zum Übertragen von Strecken. Der gewöhnliche Zirkel besteht aus zwei durch ein Scharnier verbundenen Schenkeln, von denen der eine eine Stahlspitze, der andere, meist mit einem zusätzlichen Gelenk versehen, einen auswechselbaren Zeicheneinsatz, wie eine Mine, eine Reißfeder od.dgl., trägt, der oftmals auch durch eine zweite Stahlspitze ersetzt werden kann.

Beim Arbeiten mit derartigen Zirkeln besteht oftmals das Problem, daß Kreise mit bestimmten Radien zu zeichnen sind, wobei die Einhaltung des genauen Radius von großer Wichtigkeit ist. Um hier eine entsprechende Genauigkeit einzuhalten, sind die bekannten Zirkel an ein Meßlineal mit entsprechender Längenunterteilung anzulegen und hier die entsprechende Teilung abzugreifen.

Sodann ist der Zirkel, sofern er keine Arretierungseinrichtung besitzt, entsprechend vorsichtig auf die Zeichenplatte od.dgl. aufzusetzen, um dort den entsprechenden Radius zu zeichnen oder zu stechen. Unberücksichtigt bleiben dabei jedoch die entsprechenden Elastizitäten der Schenkel, die beispielsweise beim Aufdrücken des Schenkels zu einer unbeabsichtigten Vergrößerung des Radius führen können. Außerdem ist das Abgreifen von vorgegebenen Radienmaßen eine zusätzliche Belastung beim Zeichnen.

Daher ist bereits ein Zirkel vorgeschlagen worden, bei dem der erste Schenkel mit einer Meß- und Halterungseinrichtung versehen ist, die einendseitig an den ersten Schenkel angelenkt ist und an ihrem anderen Ende eine Stecheinrichtung aufweist, wobei die Meß- und Halterungseinrichtung eine Durchbrechung aufweist, durch die ein mit Längenteilungen versehenes Meßlineal hindurchführbar ist, das mit seinem einen Ende an dem Tragteil des zweiten Schenkels lösbar befestigt ist und mit seinem anderen, freien, durch die Durchbrechung durchführbaren Ende auskragend ist (FR-PS 1 441 541).

Auch ist bereits ein Zirkel bekannt, an dessen einen Schenkel das eine Ende eines Meßlineals angeordnet ist, das mit seinem anderen freien Ende durch eine Durchbrechung im zweiten Schenkel hindurchführbar ist (DE-PS 60 665).

Bei einer anderen bekannten Ausführungsform eines Zirkels ist vorgesehen, daß an einen Schenkel ein Meßlineal schwenkbar angeordnet ist, während an dem anderen Schenkel eine Einrichtung zum Ablesen der Längenteilungen des Meßlineals angeordnet ist. Eine genaue Zuordnung zwischen der dem Stechdorn des Schenkels und den Längenteilungen des Meßlineals ist hier jedoch nicht gegeben (DE-OS 3 442 675).

Weiterhin ist es bekannt, einen Zirkel mit einem schwenkbaren Zeicheneinsatz auszustatten. Bei diesem Zirkel ist es jedoch notwendig, das entsprechende Maß von einem Meßlineal abzugreifen (FR- A 575 727).

Es ist daher Aufgabe der vorliegenden Erfindung, einen Zirkel der eingangs genannten Art so weiterzubilden, daß es möglich wird, mit dem Zirkel sowohl das Zeichnen von großen und von kleinsten Kreisen zu ermöglichen, wobei trotzdem das Abgreifen des zu zeichnenden oder zu stechenden Maßes entfällt und das einzustellende Maß direkt am Zirkel ablesbar sein soll.

Zur Lösung dieser Aufgabe wird ein Zirkel der eingangs genannten Art vorgeschlagen, bei dem vorgesehen ist, daß die Stecheinrichtung als stangenartiger Formkörper mit einem einen Winkel zu einer Vertikallängsachse der Stecheinrichtung aufweisenden, am von der Meß- und Halterungseinrichtung abgewandten Seite des Formkörpers angeordneten Stechdorn und mit einem am der Meß- und Halterungseinrichtung zugewandten Ende des Formkörpers angeordneten Gelenkkörper ausgebildet ist und daß die Stecheinrichtung über den Gelenkkörper an der Meß- und Halterungseinrichtung um die Vertikallängsachse drehbar und in zwei der Schenkelschwenkebene liegenden, um 180° versetzten Positionen des Stechdorns einrastbar ist, wobei zwei mit den Längenteilungen zusammenwirkende Meßspitzen an der Meß- und Halterungseinrichtung den Positionen des Stechdornes zugeordnet sind.

Mit dieser Ausbildung ist ein Zirkel geschaffen, mit dem das Abgreifen von Maßen von Meßlinealen entfällt, wobei es gleichzeitig möglich ist, beim Zeichnen von kleinen Kreisen oder Radien den Stechdorn nach innen zu stellen, wodurch dieser der entsprechenden Meßspitze zugeordnet ist, während der Stechdorn bei der Zeichnung großer und größter Radien der entsprechend anderen Meßspitze zugeordnet wird, so daß eine vollkommene Ausschöpfung des vom Meßlineal vorgegebenen maximalen Radius möglich ist. Darüber hinaus ist auch eine optimale Anpassung für die Abstützung des Zirkels durchführbar.

Nach einer weiteren bevorzugten Ausführungsform ist vorgesehen, daß der erste Schenkel und der zweite Schenkel jeweils aus dünnen, ineinanderschiebbaren Rohrstücken gebildet sind, wobei die Rohrstücke über Feststellschrauben in Verschieberichtung gegeneinander arretierbar sind. Mit dieser vorteilhaften Ausbildung ist gewährleistet, daß der Zirkel für die verschiedensten Einsatzbereiche einsetzbar ist. Sofern er nur für kleinste Radien eingesetzt werden soll und auch ein entsprechend kleines Meßlineal vorgesehen ist, werden die teleskopierbaren Schenkel in ihrer eingefahrenen Stellung arretiert, während beim Einsatz für große Radien die Schenkel in ihrer ausgefahrenen Stellung arretiert werden, wobei jede Zwischenstellung problemlos einstellbar ist. Zirkel mit teleskopierbaren Schenkeln sind jedoch an sich aus der DE-PS 805 191 bekannt.

Nach einer weiteren bevorzugten Ausführungsform ist vorgesehen, daß an der Meß- und Halterungseinrichtung im Bereich der Durchbrechung eine als Stellschraube ausgebildete Arretierungseinrichtung zur Feststellung und Halterung des Meßlineals in der Meß- und Halterungseinrichtung lösbar angeordnet ist. Hiermit ist es möglich, ein einmal vorgewähltes Zeichenmaß dauerhaft einzustellen, so daß beispielsweise beliebig viele Kreise oder Radien gleicher Größe zeichenbar sind, ohne daß eine Verstellung befürchtet werden muß.

Bei der weiteren bevorzugten Ausführungsform nach Anspruch 5 ergibt sich die Möglichkeit, jeweils unterschiedliche Meßlineale zu verwenden, wobei hierdurch einerseits die Anpaßbarkeit an die verschiedenen Maßsysteme gegeben wird und andererseits, insbesondere in Verbindung mit der teleskopierbaren Ausbildung der Schenkel, der Einsatzbereich des Zirkels wesentlich vergrössert wird. Sofern der Zirkel dann für größte Radien vorgesehen ist und entsprechend groß ausgebildet wird, ist bevorzugterweise vorgesehen, daß an dem Fremdkörper ein gegenüber dem Stechdorn eingezogen angeordnetes Stützrädchen drehbar gelagert ist, wobei die Drehachse und die Vertikallängsachse zueinander einen rechten Winkel bilden. Hierdurch wird ein tiefes Eindringen des Stechdorns in eine Zeichenunterlage auch bei starkem Zirkelgewicht oder entsprechendem Andruck durch den Zeichner sicher vermieden.

Um die Vorteile des Meßzirkels bei allen Einsatzbereichen, d.h. nicht nur beim technischen Zeichnen, sondern auch in den Fällen, in denen beispielsweise nicht mit einem Tuschefüller sondern mit Farbminen, Kreiden od.dgl. gearbeitet wird, zu ermöglichen, ist gemäß einer bevorzugten Ausführungsform vorgesehen, daß an dem Tragteil ein über eine Halterungseinrichtung um seine Mittelachse drehbar gelagerter und zur Aufnahme und lösbaren Halterung einer Anzahl von Zeicheneinsätzen geeigneter Scheibenkörper angeordnet ist.

Gemäß einer bevorzugten Weiterbildung ist dabei vorgesehen, daß die Halterungseinrichtung aus einem plattenförmigen, etwa rechteckigen Formkörper besteht, der mit seinem einen Ende an dem Tragteil angeordnet ist und an seinem dem einen Ende gegenüberliegenden Endabschnitt ein Drehgelenk zur drehbaren Halterung des Scheibenkörpers aufweist, wobei an einer die beiden Enden verbindenden Längskante eine zum Formkörper einen Winkel aufweisende Halterungs- und Rastplatte fest, lösbar oder über ein Schwenkgelenk gehaltert angeordnet ist.

Weitere bevorzugte Ausführungsformen sind in den Unteransprüchen gekennzeichnet und nachstehend beschrieben.

In der Zeichnung ist der Gegenstand der Erfindung beispielsweise dargestellt, und zwar zeigt

Fig. 1 den Zirkel in einer Seitenansicht,
Fig. 2 eine weitere Ausführungsform des Zirkels in einer Seitenansicht,
Fig. 3 den eine Anzahl von Zeicheneinsätzen tragenden Scheibenkörper mit seinem Anschluß an den nicht dargestellten Meßzirkel in einer senkrechten Schnittdarstellung,
Fig. 4 den Scheibenkörper nach Fig. 3 in einer vollständigen Vorderansicht,
Fig. 5 eine weitere Ausführungsform eines Zeicheneinsatzes, und
Fig. 6 eine Ansicht der Halterungseinrichtung 126 gemäß VI–VI in Fig. 3 in einer Ansicht von oben.

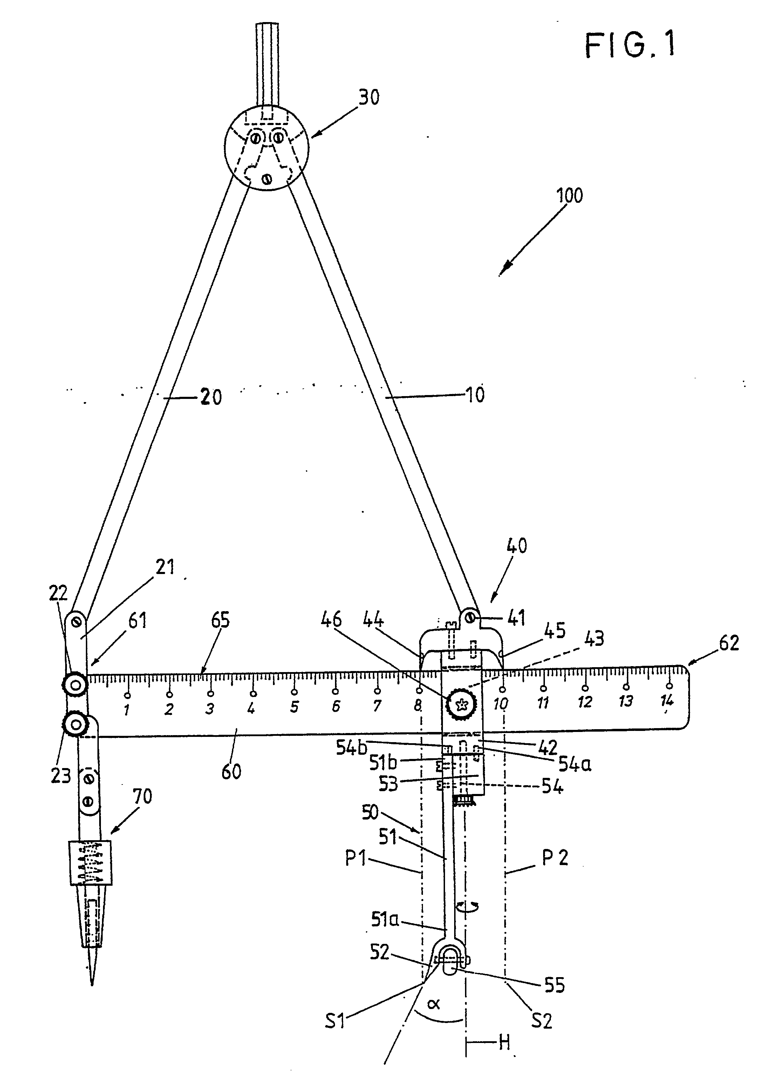

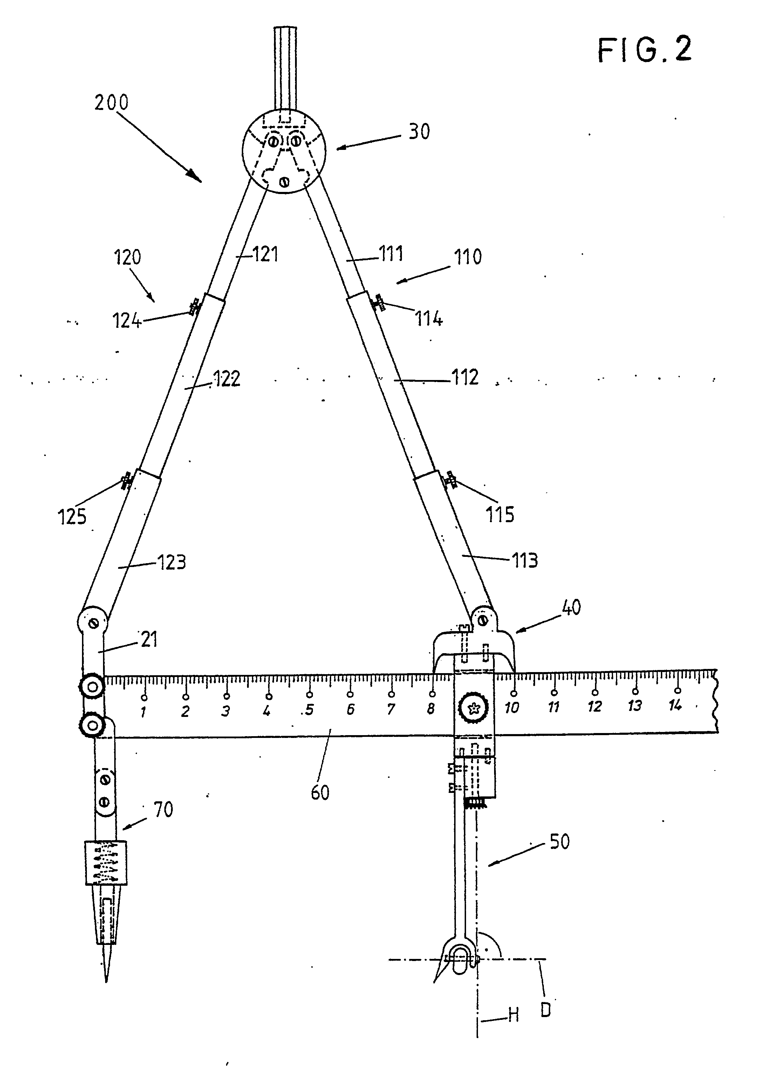

Der in Fig. 1 mit 100 bezeichnete Zirkel besteht aus zwei Schenkeln 10, 20, die über ein Scharnier 30 in an sich bekannter Weise verbunden sind. Die Meß und Halterungseinrichtung 40 ist mit ihrem einen Ende 41 gelenkig mit dem Schenkel 10 verbunden und besteht aus einem beliebig geformten Formkörper, der eine Durchbrechung 43 derart aufweist, daß ein mit Längenteilungen 65 versehenes Meßlineal 60 durch die Durchbrechung 43 frei verschiebbar hindurchführbar ist. Am unteren Ende 42 der Meß- und Halterungseinrichtung 40 ist die Stecheinrichtung 50 angeordnet, die als stangenartiger Formkörper 51 ausgebildet ist. An dessen von der Meß- und Halterungseinrichtung 40 abgewandten Ende 51a ist der Stechdorn 52 angeformt, der zur Vertikallängsachse H der Stecheinrichtung 50 einen Winkel α von vorzugsweise 30° bildet. Der Formkörper 51 weist an seinem anderen Ende einen Gelenkkörper 53 auf, der angeformt oder angeschraubt sein kann, der über einen Drehzapfen oder eine entsprechend ausgebildete Schraube 54 an der Meß- und Halterungseinrichtung 40 um die Vertikallängsachse H drehbar gelenkt ist, wobei über federbelastete Dorne 54a, 54b, die in entsprechende Ausnehmungen eingreifen, der Gelenkkörper 53 und damit letztlich der Stechdorn 52 in zwei der Schenkelverschwenkebene liegende, um 180° versetzte Positionen S1, S2 einrastbar ist. An dem Formkörper 51 ist parallel zum Stechdorn 52 ein gegenüber diesem eingezogen angeordnetes Stützrädchen 55 drehbar gelagert, dessen Drehachse D vorzugsweise in der Schenkelverschwenkebene liegt und gegenüber der Vertikallängsachse H einen rechten Winkel bildet (Fig. 2).

Die Meß- und Halterungseinrichtung 40 weist im Bereich der Durchbrechung 43 ein oder zwei Meßspitzen 44, 45 auf, die den Längenteilungen 65 des Meßlineals 60 zugeordnet sind. Bevorzugterweise liegen die Meßspitzen 44, 45 in einer zur Schenkelverschwenkebene rechtwinkligen und zur Vertikallängsachse H parallelen Ebene P1 oder P2, so daß eine direkte Zuordnung des Stechdorns 52 zur Längenteilung 65 auf dem Meßlineal 60 durchführbar ist.

Das Meßlineal 60 ist mit seinem einen Ende 61 an Tragteil 21 des zweiten Schenkels 20 lösbar befestigt und mit seinem anderen freien, durch die Durchbrechung 43 durchführbaren Ende 62 auskragend zugeordnet. Bei einer Bewegung des Schenkels 10 durchfährt das Meßlineal die Durchbrechung 43. Soll ein bestimmtes, von einer der Meßspitzen 44, 45 auf dem Meßlineal 60 angezeigtes Maß eingehalten werden, so wird eine Stellschraube 46 festgestellt, so daß eine Bewegung des Meßlineals 60 innerhalb der Durchbrechung 43 verhindert wird.

An dem Tragteil 21, an dem der auswechselbare Zeicheneinsatz 170 angeordnet ist, ist das Meßlineal über Klemm- oder Befestigungsschrauben 22, 23 befestigt, so daß ein problemloser Austausch des Meßlineals 60 durch ein anderes mit einer anderen Längenteilung möglich ist.

In Fig. 2 ist eine weitere Ausführungsform des Zirkels 200 dargestellt, bei der die Schenkel 110, 120 arretierbar sind. Hierzu sind die Schenkel 110, 120 jeweils aus dünnen, ineinanderschiebbaren Rohrstücken 111, 112, 113, 121, 122, 123 gebildet und die Rohrstücke 111, 112, 113, 121, 122, 123 sind in Verschieberichtung gegeneinander über Feststellschrauben 114, 115, 124, 125 arretierbar. Die Meß- und Halterungseinrichtung 40, die Stecheinrichtung 50, das Meßlineal 60 und der an dem Tragteil 21 angeordnete Zeicheneinsatz 70 sind in gleicher Weise ausgebildet, wie beim Zirkel 100 nach Fig. 1.

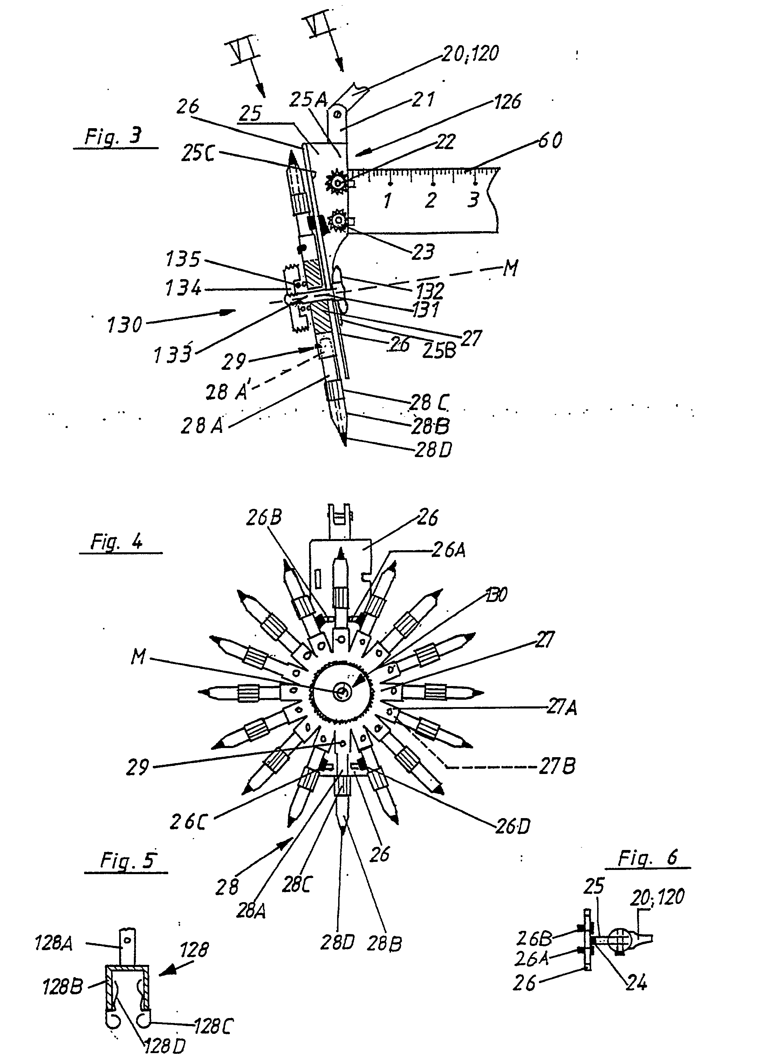

In den Fig. 3 und 4 ist eine bevorzugte Weiterbildung des Zirkels dargestellt, bei der ein an dem Tragteil 21 des zweiten Schenkels 20; 120 angeordneter Scheibenkörper 27 eine Anzahl von Zeicheneinsätzen 28 trägt, die an dem Scheibenkörper 27 über eine Einrasteinrichtung 29 lösbar angeordnet sind.

Der Scheibenkörper wird dabei an einem Formkörper 25 als Tragglied gehaltert, der die Klemmschrauben 22, 23 für das Meßlineal 60 tragend an dem Tragteil 21 angeordnet ist und eine plattenförmige, etwa rechteckige Form aufweist. Dabei ist das eine Ende 25a an dem Tragteil 21 angeordnet, während das andere Ende als ein Drehgelenk 130 tragender Endabschnitt 25b ausgebildet ist. An der Längskante 25c des Formkörpers 25 ist eine Halterungs- und Rastplatte 26 angeordnet, die zum Formkörper 25 einen rechten Winkel bildet und auf der Rastnocken 26a–d so angeordnet sind, daß sie zur rastbaren Halterung des Scheibenkörpers 27 dienen.

Der Scheibenkörper 27 weist einen kreisscheibenförmigen Grundaufbau auf, wobei an dessen Außenrand in symmetrischer Anordnung eine der Anzahl von zu halternden Zeicheneinsätzen 28; 128 entsprechende Anzahl von Aufnahmen 27a ausgebildet sind. Diese Aufnahmen 27a bestehen jeweils in einer Hohlbohrung 27b, in die ein Einsteckabschnitt 28a' eines Haltegliedes 28a; 128a des Zeicheneinsatzes 28; 128 einsteckbar ist, wobei der Einsteckabschnitt 28a, über eine geeignet ausgebildete Einrasteinrichtung 29 in der Hohlbohrung 27b der Aufnahme 27a fest gehalten wird.

Als Zeicheneinsätze können dabei die in den Fig. 3 und 4 dargestellten Zeicheneinsätze 28 Verwendung finden, die aus einem Halteglied 28a und einer Minenaufnahme 28b bestehen, in die eine Mine 28d einsteckbar ist und über eine Klemmschraube 28c verspannt wird. Die Mine 28d kann dabei eine Blei- oder Farbmine sein, es ist jedoch auch die Verwendung einer entsprechenden Kugelschreiber-, Filzstift-, Kopierstiftspitze od.dgl. denkbar. Als Zeicheneinsatz kann jedoch auch der in Fig. 5 dargestellte Zeicheneinsatz 128 Verwendung finden, der aus dem Halteglied 128a, das in der voranstehend beschriebenen Weise in die Aufnahme 27a einsteckbar ist, einer Aufnahmehalterung B und einer in geeigneter Weise daran angeordneten Klemmfeder 128c besteht. Neben der Klemmfeder 128c sind jedoch auch andere schnell lösbare Einspanneinrichtungen wie eine unter Federdruck stehende Spannkugel oder ein entsprechend angeordnetes Federstahlblech, wie dies bei 128d angedeutet ist, anordbar.

Der Scheibenkörper 27 ist über das Drehgelenk 130 an der Halterungs- und Rastplatte drehbar angeordnet. Das Drehgelenk besteht dabei aus dem Gewindebolzen 131, der an seinem einen Ende mit einem Flügelmutterkopf 132 fest versehen ist und an seinem anderen den Formkörper 25 und die Halterungs- und Rastplatte 26 durchtretenden Ende einen Gewindeabschnitt 133 aufweist. Der Gewindeabschnitt 133 ist soweit auskragend, daß auf diesen eine mit einem Eingreifprofil versehene Mutter 134 aufschraubbar ist, wobei zwischen der Mutter 134 und dem Scheibenkörper 27 eine beispielsweise als Druckfeder 135 oder als Federblech konzipierte Federeinrichtung angeordnet ist.

Zur Verstellung des Scheibenkörpers wird die Mutter 134 leicht gelöst und der Scheibenkörper 27 so angehoben, daß die entsprechenden Halteglieder 28a der Zeicheneinsätze 28 aus dem jeweiligen Zwischenraum zwischen den Rastnocken 26a, 26b bzw. 26c, 26d herausgeführt werden und eine Drehung des Scheibenkörpers 27 möglich ist. Der Scheibenkörper 27 wird dann soweit gedreht, bis die gewünschte Einstellung erreicht ist, d.h. bis die gewünschte Mine 28d nach unten zeigt. Sodann rutschen die entsprechenden Halteglieder 26a wieder zwischen die entsprechenden Rastnocken 26a, 26b bzw. 26r, 26d und werden durch den Druck der Feder 135 sicher zwischen diesen gehalten. Auf diese Weise ist ein einfaches Wechseln beispielsweise von Minen unterschiedlicher Farbe oder unterschiedlicher Strichstärke möglich.

Es ist weiterhin möglich, die Halterungs- und Rastplatte gegenüber dem Formkörper 25 über ein Gelenk 24 verschwenkbar anzuordnen, wie dies in Fig. 6 angedeutet ist. Dabei kann eine Verschwenkung sowohl um die Vertikalachse als auch um die Horizontalachse vorgesehen werden.

Die Erfindung ist nicht auf die voranstehend dargestellten und beschriebenen Ausführungsformen beschränkt. Da wesentliche Erfindungsgedanken in der Teleskopierbarkeit von Zirkelbestandteilen und in der Anordnung eines Meßlineals bestehen, liegt die teleskopierbare Ausbildung anderer Teile des Zirkels ebenso im Rahmen der Erfindung wie eine andere, die gleiche Wirkung erzielende Anordnung eines Meßlineals.

**Patentansprüche**

1. Zirkel (100), bestehend aus zwei durch ein Scharnier (30) schwenkbar verbundenen Schenkeln (10; 110, 20; 120), von denen der erste Schenkel (10; 110) eine Stahlspitze oder Zentriernadel als Stecheinrichtung (50) und der zweite Schenkel (20; 120) ein einen auswechselbaren Zeicheneinsatz (70) tragenden und über ein Gelenk verbundenen Tragteil (21) aufweist, wobei der erste Schenkel (10; 110) mit einer Meß- und Halterungseinrichtung (40) versehen ist, die einendseitig (41) an den ersten Schenkel (10; 110) angelenkt ist und an ihrem anderen Ende (42) eine Stecheinrichtung (50) aufweist, wobei die Meß- und Halterungseinrichtung (40) eine Durchbrechung (43) aufweist, durch die ein mit Längenteilungen (65) versehenes Meßlineal (60) hindurchführbar ist, das mit seinem einen Ende (61) an dem Tragteil (21) des zweiten Schenkels (20; 120) lösbar befestigt ist und mit seinem anderen freien, durch die Durchbrechung (43) durchführbaren Ende (62) auskragend ist, dadurch gekennzeichnet, daß die Stecheinrichtung (50) als stangenartiger Formkörper (51) mit einem einen Winkel ($\alpha$) zu einer Vertikallängsachse (H) der Stecheinrichtung (50) aufweisenden, am von der Meß- und Halterungseinrichtung (40) abgewandten Seite (51a) des Formkörpers (51) angeordneten Stechdorn (52) und mit einem am der Meß- und Halterungseinrichtung (40) zugewandten Ende (51b) des Formkörpers (51) angeordneten Gelenkkörper (53) ausgebildet ist und daß die Stecheinrichtung (50) über den Gelenkkörper (53) an der Meß- und Halterungseinrichtung (40) um die Vertikallängsachse (H) drehbar und in zwei in der Schenkelschwenkebene liegenden, um 180° versetzten Positionen (S1, S2) des Stechdorns (52) einrastbar ist, wobei zwei mit den Längenteilungen (65) zusammenwirkende Meßspitzen (44, 45) an der Meß- und Halterungseinrichtung (40) den Positionen (S1, S2) des Stechdornes (52) zugordnet sind.

2. Zirkel nach Anspruch 1, dadurch gekennzeichnet, daß der ersten Schenkel (110) und der zweite Schenkel (120) jeweils aus dünnen, ineinanderschiebbaren Rohrstücken (111, 112, 113; 121, 122, 123) gebildet sind, wobei die Rohrstücke (111, 112, 113; 121, 122, 123) über Feststellschrauben (114, 115; 124, 125) in Verschieberichtung gegeneinander arretierbar sind.

3. Zirkel nach Anspruch 1 oder 2, dadurch gekennzeichnet, daß an der Meß- und Halterungseinrichtung (40) im Bereich der Durchbrechung (43) eine als Stellschraube (46) ausgebildete Arretierungseinrichtung zur Feststellung und Halterung des Meßlineals (60) in der Meß- und Halterungseinrichtung (40) lösbar angeordnet ist.

4. Zirkel nach Anspruch 1, dadurch gekennzeichnet, daß das Meßlineal (60) über Klemmschrauben (22, 23) an dem Tragteil (21) des zweiten Schenkels (20; 120) befestigt ist.

5. Zirkel nach Anspruch 1, dadurch gekennzeichnet, daß an dem Formkörper (51) der Stecheinrichtung (50) ein gegenüber dem Stechdorn (52) eingezogen angeordnetes Stützrädchen (55) drehbar gelagert ist, wobei die Drehachse (D) und die Vertikallängsachse (H) zueinander einen rechten Winkel bilden.

6. Zirkel nach Anspruch 1, dadurch gekennzeichnet, daß an dem Tragteil (21) ein an eine Halterungseinrichtung (126) um seine Mittelachse (M) drehbar gelagerter und zur Aufnahme und lösbaren Halterung einer Anzahl von Zeicheneinsätzen (28, 128) geeigneter Scheibenkörper (27) angeordnet ist.

7. Zirkel nach Anspruch 6, dadurch gekennzeichnet, daß die Halterungseinrichtung (126) aus einem plattenförmigen, etwa rechteckigen Formkörper (25) besteht, der mit seinem einen Ende (25a) an dem Tragteil (21) angeordnet ist und an seinem dem einen Ende (25a) gegenüberliegenden Endabschnitt (25b) ein Drehgelenk (130) zur drehbaren Halterung des Scheibenkörpers (27) aufweist, wobei an einer die beiden Enden (25a, 25b) verbindenden Längskante (25c) eine zum Formkörper einen Winkel aufweisende Halterungs- und Rastplatte (26) fest, lösbar oder über ein Schwenkgelenk (24) gehaltert angeordnet ist.

8. Zirkel nach Anspruch 6 oder 7, dadurch gekennzeichnet, daß der Scheibenkörper (27) eine der Anzahl von zu halternden Zeicheneinsätzen (28; 128) entsprechende Anzahl von Aufnahmen (27a) aufweist, die jeweils aus einer Hohlbohrung (27b) zur Aufnahme eines Einsteckabschnittes (28a') eines Haltegliedes (28a; 128a) des Zeicheneinsatzes (28; 128) bestehen.

9. Zirkel nach Anspruch 8, dadurch gekennzeichnet, daß der Zeicheneinsatz (28) aus dem Halteglied (28a), einer eine Blei- oder Farbmiene (28d) tragenden und über eine Klemmschraube (28c) zur Halterung der Blei- oder Farbmiene (28d) verspannbare und gehalterte Mienenaufnahme (28b) besteht.

10. Zirkel nach Anspruch 8, dadurch gekennzeichnet, daß der Zeicheneinsatz (128) aus dem Halteglied (128a) und einer daran angeordneten und zur Aufnahme einer Blei- oder Farbmiene, eines Kreidestiftes oder dgl. geeigneten Aufnahmehalterung (128b) besteht.

11. Zirkel nach Anspruch 6, dadurch gekennzeichnet, daß das Drehgelenk (130) einen Gewindebolzen (131), der einendseitig mit einem Flügelmutterkopf (132) und an seinem anderen Ende mit einem Gewindeabschnitt (133) versehen ist und durch den Formkörper (25) und die Halterungs- und Rastplatte (26) hindurchgeführt ist, aufweist, wobei auf dem Gewindeabschnitt (133) eine den Scheibenkörper (27) halternde und über eine Feder (135) gegen die Halterungs- und Rastplatte (26) verspannbare und mit einer Greifprofilierung versehene Mutter (134) drehbar ist.

12. Zirkel nach Anspruch 6, dadurch gekennzeichnet, daß die Halterungs- und Rastplatte (26) Rastnocken (26a, 26b, 26c, 26d) aufweist, die sich jeweils paarweise (26a, 26b; 26c, 26d) gegenüberliegend zur einrastbaren Halterung von je zwei Zeicheneinsätzen (28; 128) oder von je zwei Aufnahmen (27a) und damit des Scheibenkörpers (27) geeignet sind.

13. Zirkel nach einem der Ansprüche 1 bis 12, dadurch gekennzeichnet, daß der Stechdorn (52) zur Vertikallängsachse (H) der Stecheinrichtung (50) ein Winkel ($\alpha$) von 30° aufweist.

**Claims**

1. A pair of compasses (100) comprising two legs (10; 110, 20; 120) swivellingly connected by a hings (30), the first leg of which (10; 110) is provided with a steel point or a centering needle as scribing device (50) and the second leg (20; 120) with a carrying element connected by means of a joint and carrying a replaceable drawing insert (70), wherein the first leg (10; 110) is provided with a measuring and mounting facility (40) which, at one of its ends (41) is linked to the first leg (10; 110) and, at its other end (42), is fitted with a scribing device (50), the measuring and mounting facility (40) is provided with an aperture (43) through which a measuring ruler (60) provided with lengthwise graduations (65) can be passed which, with one of its ends (61) is detachably secured to the supporting element (21) of the second leg (20; 120) and which projects with its other free end (62) that can be passed through the aperture (43), characterized in that the scribing device (50) is constructed as a rod-like shaped member (51) with a scribing spike (52) disposed on the end (51a) facing away from the measuring and mounting facility (40) of the shaped member (51) showing an angle α to a vertical longitudinal angle (H) of the scribing device (50), as well as with an articulated member (53) disposed on the end (51b) of the shaped member (51) facing the measuring and mounting facility (40), and in that the scribing device (50) is rotatable via the articulated member (53) on the measuring and mounting facility (40) around the vertical axis (H) and can be locked in two positions (S1, S2) lying in the swivelling plane of the leg and displaced by 180° of the scribing spike (52), while two point-like configured indicators (44, 45) intercating with the lengthwise graduations (65) on the measuring and mounting facility (40) are allocated to the positions (S1, S2).

2. A pair of compasses according to Claim 1, characterized in that the first leg (110) and the second leg (120) each are constructed of thin, inter-telescopable tubular portions (111, 112, 113; 121, 122, 123), wherein the tubular portions (111, 112, 113; 121, 122, 123) can be locked relative to one another in the sliding directions by means of locking screws (114, 115; 124, 125).

3. A pair of compasses according to either Claim 1 or 2, characterized in that, on the measuring and mounting facility (40), within the area of the aperture (43), a locking device constructed as a set-screw (46) for locking in position and supportingly mounting the measuring ruler (60), is detachably disposed in the measuring and mounting facility (40).

4. A pair of compasses according to Claim 1, characterized in that the measuring ruler (60) is secured to the carrying element (21) of the second leg (20; 120) by means of locking screws (22, 23).

5. A pair of compasses according to Claim 1, characterized in that, on the shaped member (51) of the scribing device (50), a small supporting wheel (55) is disposed opposite the scribing spike in a retracted manner and pivotably supported, wherein the axis of rotation (D) and the vertical longitudinal axis (H) form a right angle to each other.

6. A pair of compasses according to Claim 1, characterized in that, on the carrying element (21), a disk member (27) is arranged pivotably supported about its center axis (M) on a supporting device (126), said disk member being suitable for the accommodation and the detachable clamping of a number of drawing inserts (28, 128).

7. A pair of compasses according to Claim 6, characterized in that the supporting device (126) consists of a plate-like, approximately rectangular shaped member (25) which, with one of its ends (25a) is arranged on the carrying element (21) and which, on its terminal section (25b) located opposite one of its ends (25a), has a swivel joint (130) for the rotatable mounting of the disk member (27), in which, on a longitudinal edge (25c) connecting the two ends (25a, 25b), a mounting and locking plate (26) featuring an angle relative to the shaped member is disposed either rigidly, detachably or mounted with the aid of a swivelling joint (24).

8. A pair of compasses according to either Claims 6 or 7, characterized in that the disk member (27) is provided with a number of retention recesses (27a) corresponding to the number of drawing inserts (28; 128) to be clampingly mounted, each of which consists of a trepanned bore (27b) for the accommodation of an inserting section (28a′) of a retention member (28a; 128a) of the drawing insert (28; 128).

9. A pair of compasses according to Claim 8, characterized in that the drawing insert (28) consists of the retention member (28a), an accommodation means (28b) carrying a pencil cartridge or a color cartridge which can be clamped and mounted with the aid of a set-screw (28c) for holding the pencil cartridge or color cartridge (28d).

10. A pair of compasses according to Claim 8, characterized in that the drawing insert (128) consists of the retention member (128a) and a supporting mounting means (128b) arranged thereon and suitable for the insertion of a pencil or color cartridge, a chalk pencil or the like.

11. A pair of compasses according to Claim 6, characterized in that the swivel joint (130) has a threaded bolt (131) which, at one of its ends, is provided with a butterfly nut head (132) and, at its other end, with a threaded section (133) penetrating the shaped member (25) and the mounting and locking plate (26), wherein, on the threaded section (133), a nut (134) provided with a knurl-like and readily gripped peripheral surface supportingly mounts the disk member (27) and, with the aid of a spring (135), can be clamped and rotated against the mounting and locking plate (26).

12. A pair of compasses according to Claim 6, characterized in that the mounting and locking plate (26) is provided with arresting pins (26a, 26b, 26c, 26d) which, two at a time (26a, 26b; 26c, 26d) located opposite one another are suitable for the engageable mounting of two drawing inserts (28; 128) at a time or of two retention recesses (27a) each and, thereby, of the disk member (27).

13. A pair of compasses according to any of the Claims 1 to 12, characterized in that the scribing spike (52), relative to the vertical longitudinal axis (H) of the scribing device (50), has an angle (α) of 30°.

## Revendications

1. Compas (100) composé de deux branches (10; 110, 20; 120) reliées de manière pivotante par une charnière (30) dont la première branche (10; 110) présente une pointe en acier ou une aiguille de centrage comme dispositif pour piquer (50) et dont la seconde branche (20; 120) présente une partie porteuse (21) portant un insert à dessin (70) interchangeable et reliée par une articulation, la première branche (10; 110) étant équipée d'un dispositif de mesure et de fixation (40) qui est articulé à l'une de ses extrémités (41) sur la première branche (10; 110) et qui présente, à son autre extrémité (42), un dispositif pour piquer (50), le dispositif de mesure et de fixation (40) présentant une découpure (43) qui peut être traversée par une règle de mesure (60) pourvue de graduations de longueur (65) qui est fixée par l'une de ses extrémités (61) à la partie porteuse (21) de la seconde branche (20, 120) de manière détachable et qui fait saillie par son autre extrémité libre (62) qui peut traverser la découpure (43), caractérisé en ce que le dispositif pour piquer (50) est configuré comme un corps profilé (51) du type barre avec une pointe sèche (52) présentant un angle (α) avec l'axe longitudinal vertical (H) du dispositif pour piquer (50) et placée sur le côté (51a) du corps profilé opposé au dispositif de mesure et de fixation (40) et avec un corps articulé (53) placé à l'extrémité (51b) du corps profilé (51) tournée vers le dispositif de mesure et de fixation (40) et que le dispositif pour piquer (50) est rotatif autour de l'axe longitudinal vertical (H) par l'intermédiaire du corps articulé (53) sur le dispositif de mesure et de fixation (40) et qu'il peut prendre l'encoche dans deux positions (S1, S2) de la pointe sèche (52) se situant dans l'axe de pivotement de la branche et décalées de 180°, deux pointes de mesure (44, 45) sur le dispositif de mesure et de fixation (40), qui coopèrent avec les graduations de longueur (65), étant attribuées aux positions (S1, S2) de la pointe sèche (52).

2. Compas selon la revendication 1, caractérisé en ce que la première branche (110) et la seconde branche (120) sont formées respectivement par des morceaux de tube minces coulissants (111, 112, 113; 121, 122, 122), les morceaux de tube (111, 112, 113; 121, 122, 123) pouvant être bloqués l'un par rapport à l'autre dans le sens du coulissement par des vis de blocage (114, 115; 124, 125).

3. Compas selon la revendication 1 ou 2, caractérisé en ce qu'un dispositif d'arrêt, configuré comme une vis de blocage (46), est placé en étant détachable sur le dispositif de mesure et de fixation (40) dans la zone de la découpure (43) pour bloquer et fixer la règle de mesure (60) dans le dispositif de mesure et de fixation (40).

4. Compas selon la revendication 1, caractérisé en ce que la règle de mesure (60) est fixée à la partie porteuse (21) de la seconde branche (20; 120) par des vis de serrage (22, 23).

5. Compas selon la revendication 1, caractérisé en ce qu'une petite roue d'appui (55), placée en position rentrée en face de la pointe sèche (52), est positionnée de manière à être rotative sur le corps profilé (51) du dispositif pour piquer (50), l'axe de rotation (D) et l'axe longitudinal vertical (H) formant un angle droit l'un par rapport à l'autre.

6. Compas selon la revendication 1, caractérisé en ce qu'un corps en forme de disque (27), rotatif autour de son axe central (M) sur un dispositif de fixation (126) et apte à loger et fixer de manière amovible un certain nombre d'inserts à dessin (28, 128) est placé sur la partie porteuse (21).

7. Compas selon la revendication 6, caractérisé en ce que le dispositif de fixation (126) se compose d'un corps profilé (25) en forme de plaque à peu près rectangulaire qui est placé, par l'une de ses extrémités (25a), sur la partie porteuse (21) et qui présente, sur sa portion terminale (25b) opposée à l'une des ses extrémités (25a), une articulation tournante (130) pour fixer le corps en forme de disque (27) de manière rotative, une plaque de fixation et d'arrêt (26), présentant un angle avec le corps profilé, étant placée sur une arête longitudinale (25c) reliant les deux extrémités (25a, 25b) en étant fixe, détachable ou fixée par une articulation pivotante (24).

8. Compas selon la revendication 6 ou 7, caractérisé en ce que le corps en forme de disque (27) présente un certain nombre de logements (27a) correspondant au nombre des inserts à dessin (28; 128) à fixer, logements qui se composent respectivement d'use forure creuse (27b) pour loger une portion emboîtable (28a') d'un élément de maintien (28a; 128a) de l'insert à dessin (28; 128).

9. Compas selon la revendication 8, caractérisé en ce que l'insert à dessin (28) est constitué par l'élément de maintien (28a) et un logement de mine (28b), qui porte une mine de plomb ou de couleur (28d), qui est fixé et qui peut être serré par une vis de serrage (28c) pour fixer la mine de plomb ou de couleur (28d).

10. Compas selon la revendication 8, caractérisé en ce que l'insert à dessin (128) est constitué par l'élément de maintien (128a) et par une fixation de logement (128b) placée sur celui-ci et apte à loger use mine de plomb ou de couleur, un crayon de craie ou équivalent.

11. Compas selon la revendication 6, caractérisé en ce que l'articulation tournante (130) présente un boulon fileté (131) qui est pourvu, à l'une de ses extrémités, d'une tête d'écrou à oreilles (132) et à son autre extrémité, d'une portion filetée (133) et qui traverse le corps profilé (25) et la plaque de fixation et d'arrêt (26), un écrou (134) pourvu d'un profil d'engrènement, fixant le corps en forme de disque (27) et pouvant être serré contre la plaque de fixation et d'arrêt (26) par un ressort (135), étant rotatif sur la portion filetée (133).

12. Compas selon la revendication 6, caractérisé en ce que la plaque de fixation et d'arrêt (26) présente des ergots d'arrêt (26a, 26b, 26c, 26d) qui, opposés les uns aux autres respectivement par paires, sont aptes à fixer et enclencher respectivement deux inserts à dessin (28; 128) ou respectivement deux logements (27a) et donc le corps en forme de disque (27).

13. Compas selon l'une des revendications 1 à 12, caractérisé en ce que la pointe sèche (52) présente

un angle ($\alpha$) de 30° par rapport à l'axe longitudinal vertical (H) du dispositif pour piquer (50).

FIG.1

EP 0 311 710 B1

FIG.2

Fig. 3

Fig. 4

Fig. 5

Fig. 6